# EUROPÄISCHE PATENTSCHRIFT

(11) **EP 1 772 062 B1**
(45) Veröffentlichungstag und Bekanntmachung des Hinweises auf die Patenterteilung: **13.06.2018**
(21) Anmeldenummer: 06020987.1
(22) Anmeldetag: 06.10.2006
(51) Int. Cl.: A23L 19/00, A23B 7/08, A23B 7/14, A23L 21/12, A23L 21/15, A23L 33/10

(54) **Verfahren und Gefäss zur Herstellung von verdickten Zubereitungen**
Method and receptacle for the preparation of thickened preparations
Procédé et récipient pour la préparation des compositions épaissies

(30) Priorität: 07.10.2005 DE 102005049192
(43) Veröffentlichungstag der Anmeldung: 11.04.2007
(73) Patentinhaber: Südzucker Aktiengesellschaft Mannheim/Ochsenfurt, 68165 Mannheim (DE)
(72) Erfinder: Kowalczyk, Jörg, Dr., 67304 Eisenberg/Steinborn (DE); Rapp, Knut, Dr., 67591 Offstein (DE)
(74) Vertreter: Schwahn, Hartmut

(56) Entgegenhaltungen:
- EP-A1- 0 931 463
- WO-A-02/35944
- WO-A2-2004/030469
- WO-A2-2004/084718
- FR-A1- 2 707 840
- US-A1- 2004 208 976
- DATABASE WPI Week 200273 Derwent Publications Ltd., London, GB; AN 2002-679212 XP002419051 & KR 2002 023 701 A (BANG K R) 29. März 2002 (2002-03-29)

## Beschreibung

Die Erfindung betrifft Verfahren und Verwendung von Verdickungsmittelzusammensetzungen zur Herstellung von verdickten, beispielsweise gelierten oder kaltgerührten Frucht- und Gemüsezubereitungen sowie Vorrichtungen zur Herstellung und zur Durchführung der Verfahren.

### Stand der Technik

Konfitüren, Marmeladen und Gelees sind seit jeher als Brotaufstrich beliebt und von großer Bedeutung. Darüber hinaus gewinnen aber auch andere brei-, soßen- oder geleeartige Zubereitungen mit verdickter Konsistenz aus Obst oder Gemüse mehr an Bedeutung. So wird beispielsweise beim Grillen oder Fondue neben Senf, Mayonnaise und Ketchup auch so genannte Chutneys oder Relishes als Beilagen verwendet. Auch kommen Obstbrei und Obstsoßen mit verdickter Konsistenz zur Verfeinerung von Süßspeisen zur Anwendung.

Besonders bei Konfitüren, Marmeladen und Gelees hat das Merkmal "selbstgemacht" oder "hausgemacht" beim Verbraucher eine besondere Bedeutung. Ernährungsbewusste Verbraucher wünschen selbstgemachte Fruchtzubereitungen wie Konfitüren und Gelees aus frischen und damit auch gesunden Zutaten, insbesondere Obst und/oder Gemüse. Die traditionelle Herstellung von gekochten Konfitüren, Marmeladen oder Gelees ist jedoch arbeitsintensiv und mit einem hohen Zeitaufwand verbunden. Darüber hinaus kommen bei der Herstellung viele Haushaltsgerätschaften zum Einsatz, die zum einen im Haushalt vorhanden sein müssen und die zum anderen nach Gebrauch oft nicht einfach zu reinigen sind (Töpfe, Waage, Mixer, Rührer, Trichter, Herd). Vor allem müssen auch saubere, nicht mikrobiell oder geschmacklich kontaminierte, dicht schließende Konfitürengläser oder ähnlich brauchbare Gefäße in ausreichender Menge vorhanden sein. Ersatzbehälter wie ehemalige Sauerkonservengläser, zum Beispiel Gurken-, Zwiebel-, Rote-Beete- oder Senfgläser, verschlechtern nicht nur den Geschmack. Gelegentlich wird der neue Inhalt auch mit noch vorhandenen unerwünschten Mikroorganismen kontaminiert. Häufig schließen die Deckel solcher Gefäße, besonders nach mehrmaligem Gebrauch, den Inhalt nicht mehr vollständig ab, was bei Lagerung zu unerwünschter Verfärbung durch Oxidation sowie zu gesundheitlich bedenklichem Befall mit Mikroorganismen führen kann.

Verdickungsmittelzusammensetzungen, beispielsweise Geliermittelzusammensetzungen (diese werden im Handel meist als "Gelierzucker" bezeichnet), werden seit langer Zeit als fertige Mischungen für die Verwendung im Haushalt hergestellt. Aus diesen Mischungen werden vor allem Konfitüren, Marmeladen und/oder Gelees hergestellt. In der Regel werden dabei bestimmte Mengen an Früchten, Fruchtauszügen und/oder Fruchtsäften mit der Verdickungsmittelzusammensetzung gemischt, wobei im Allgemeinen ein Gewichtsverhältnis 1:1, 2:1 oder auch 3:1 zwischen dem genannten zu verdickendem Gut und der Verdickungsmittelzusammensetzung eingehalten wird.

Es ist bei der herkömmlichen Herstellweise generell erforderlich, dass zu größeren Mengen an in einem Topf vorgelegter Fruchtmasse und/oder Fruchtsaft die Verdickungsmittelzusammensetzung zugegeben und in die Fruchtmasse und/oder Fruchtsäfte eingerührt wird. Die Mischung aus Gelierzucker und Früchten muss dann bis zum Kochpunkt erhitzt und eine gewisse Zeit (sprudelnd) gekocht werden, vor allem um eine bestimmte Menge Wasser zu verdampfen und damit die Trockensubstanz zu erhöhen, da nur dann ein gutes Gelieren der Masse gelingt. Die noch heiße Mischung wird dann auf viele kleinere vorbereitete geeignete Gefäße aufgeteilt.

Durch den Vorgang des längeren Kochens bei einer Kochtemperatur, die in Gegenwart von Zucker und Fruchtmasse über 100 °C beträgt, werden bekanntermaßen eine Reihe wertvoller Inhaltsstoffe in dem zu verdickenden Gut zerstört. Darunter zählen vor allem Vitamine und wertvolle Pflanzeninhaltsstoffe. Ernährungsbewusste Verbraucher sind daher darauf aus, Frucht- und/oder Gemüsezubereitungen zu erhalten, die ohne Kochen und damit unter Schonung der Inhaltsstoffe in Gemüse und Früchten hergestellt werden können.

Das Kochen bei der üblichen Herstellungsweise verdickter Zubereitungen ist nachteilig, wenn diese in Gegenwart von Kindern oder durch Kinder hergestellt werden sollen. Kinder schätzen oft die Gefahren heißer Flüssigkeiten falsch ein, sodass die herkömmliche Herstellung mit herkömmlichem Gelierzucker für Kinder ungeeignet ist. Jedoch sollten gerade Kinder frühzeitig an eine gesunde Ernährungsweise herangeführt werden. Dies könnte idealerweise durch die gefahrlose Verarbeitung von frischem Obst und/oder Gemüse zu einer schmackhaften verdickten und gegebenenfalls süßen Zubereitung erfolgen.

Darüber hinaus besitzt eine auf herkömmliche Weise frisch gekochte Zubereitung aufgrund ihres typischerweise hohen Trockensubstanzgehalts eine hohe Dichte und einen hohen Wärmekoeffizient, sodass die in der Zubereitung gespeicherte Hitze nur langsam abgegeben wird. Die unmittelbare Verkostung des frisch hergestellten Produkts ist daher nachteiligerweise ausgeschlossen.

Bekannte Verdickungsmittelzusammensetzungen, beispielsweise Gelierzucker, bestehen hauptsächlich aus Zucker vor allem Saccharose. Bekannte Verdickungsmittelzusammensetzungen enthalten mindestens ein Geliermittel. Das Geliermittel ist häufig Pektin.

Es sind auch andere Gelier- oder Verdickungsmittel, beispielsweise Carrageen, bekannt. Carrageen kann als Verdickungsmittel zur Herstellung kaltgerührter Zubereitungen dienen. Kaltgerührte Zubereitungen erhalten ihre verdickte Konsistenz bereits durch intensives Vermischen eines Geliermittels mit den restlichen Komponenten in der Kälte, das heißt besonders bei Raumtemperatur, wobei ein Erhitzen, vor allem ein Erhitzen bis zur Kochtemperatur, vermieden wird. Kaltgerührte verdickte Zusammensetzungen auf Basis des Geliermittels Carrageen sind nachteilig, da sie weder während als auch nach der Herstellung der Zubereitung, beispielsweise zur Haltbarmachung mittels Pasteurisieren, erhitzt werden dürfen. Carrageene bilden beim Erhitzen gesundheitsschädliche Spaltprodukte.

Bekannte alternative kaltgerührte Konfitüren, die kein Carrageen enthalten, müssen bei der Herstellung über längere Zeit, beispielsweise bis 60 Minuten, intensiv gerührt werden, bis die Bestandteile, vor allem das Verdickungsmittel, aufgelöst sind und eine Verdickung einsetzen kann.

Weiter enthalten Verdickungsmittelzusammensetzungen in der Regel Genusssäuren wie Citronensäure sowie gegebenenfalls mindestens einen Konservierungsstoff, beispielsweise Sorbinsäure, oder Kaliumsorbat.

In der Regel werden die zum Gelieren oder Verdicken vorgesehenen Früchte oder Gemüse abgewogen, da die Mengenverhältnisse Geliergut zu Geliermittelzusammensetzung auf handelsüblichen Verpackungen als Gewichtsverhältnis angegeben werden. Dadurch wird der Arbeitsschritt des Abwiegens sowie das Vorhandensein einer Waage erforderlich. Das Abwiegen ist darüber hinaus oft fehlerbehaftet, da die normalerweise verwendeten Küchenwagen häufig unzureichend geeicht sind und dadurch vor allem bei der Herstellung kleinerer Mengen fehlerhaft abgewogen wird, was das Gelierergebnis verschlechtert. Dies gilt auch für den Fall, dass bei der Verwendung nur eine Teilmenge des in einem Paket enthaltenen Gelierzuckers auch der Zucker abgewogen werden muss.

Für den Verbraucher käuflich erhältliche Gelierzuckerverpackungen enthalten praktisch alle Tausend Gramm oder 500 g Gelierzucker. Diese Mengen sind für eine Menge von ca. 1 bis 2 kg Fruchtmasse geeignet. Daneben gibt es auch konzentriertere Gelierzuckermischungen für zuckerreduzierte 1:3 und 1:2 Mischungen (sogenannte "2plus1" und "3plus1" Mischungen). Allen ist aber gemeinsam, dass die damit hergestellte Gesamtmenge an Zubereitung immer zwischen 1 und 2 ½ kg beträgt. Diese große Fruchtmenge ergibt dann etwa 4 bis 20 haushaltsübliche Gläser geliertes Produkt. Heute leben jedoch viele Menschen in Ein- oder Zwei-Personen-Haushalten, und zwar sowohl jüngere als auch besonders viele ältere. Große oder viele Portionen werden häufig nicht gewünscht, da dann angebrochene Gläser oft längere Zeit stehen bleiben und an Geschmack und Farbe verlieren oder verderben. Vor allem wünschen moderne Konsumenten eine abwechslungsreiche Ernährung. Die übliche Herstellung von Konfitüren und Marmeladen einer einzigen Sorte in großer Menge ermöglicht keine Abwechslung.

Die (handelsüblich nicht vorgesehene) Entnahme von Teilmengen aus Gelierzuckerpaketen ist ungeeignet, kleinere Mengen an gelierten Frucht- und/oder Gemüsezubereitungen herzustellen. Nur der Gesamtinhalt eines Paketes ermöglicht mit der Gesamtmenge an Früchten und der zugehörigen empfohlenen Kochzeit eine sichere Gelierung der Kochmasse. Außerdem entmischt sich die Verdickungsmittelzusammensetzung in handelsüblichen Gelierzuckerpaketen im Laufe der Zeit, sodass Teilmengen, die dem Gesamtpaket entnommen werden, eine mit hoher Wahrscheinlichkeit verhältnismäßig falsche Zusammensetzung der Gelierzuckerbestandteile, beispielsweise Zucker, Pektin und Citronensäure aufweisen würden. Bekannte Gelierzucker sind Mischungen aus verschiedenen (bezogen auf chemische Zusammensetzung, Korngrößenverteilung, Kristallzusammensetzung) Feststoffen, die zur Entmischung neigen. Das heißt im Boden des Paketes eine andere Zusammensetzung aufweisen wie im oberen Teil. Besteht aber kein genau eingehaltenes Verhältnis von Zucker zu Pektin zu Säure ist im Zusammenhang mit dem auf der Verpackung angegebenen Rezept eine Gelierung nicht gewährleistet. Darüber hinaus könnte bei Entmischung einer gegebenenfalls enthaltenen Konservierungsstoffkomponente eine gesundheitlich bedenkliche Über- oder Unterdosierung resultieren.

Es besteht der Bedarf an Möglichkeiten zur Herstellung selbstgemachter verdickter, insbesondere kaltgerührter oder gelierter Frucht- und Gemüsezubereitungen in kleinen Mengen und großer Vielfalt. Die WO 2004/030469 A2 beschreibt Verdickungsmittelzusammensetzungen zur Herstellung verdickter Frucht- und Gemüsezubereitungen im Haushalt. Die WO 2004/084718 A2 beschreibt Fruchtgummizusammensetzungen, welche durch Hinzufügen von Fruchtkonzentraten zu einer gelierenden Grundmasse hergestellt werden. Die KR 2002-023701 A (XP 002419051) beschreibt ein Verfahren zur Herstellung von verdickten Lebensmitteln, wobei die Lebensmittel zu einer kochsalzhaltigen kolloidalen Gelatinelösung hinzugefügt werden. Die FR 2707840 A1 beschreibt ein Verfahren zur Herstellung einer gelierten Fruchtzubereitung, wobei eine Fruchtzusammensetzung mit einer Verdickungsmittelzusammensetzung aus Zucker und Gelan vermischt wird. Die EP 0931463 A1 beschreibt ein geliertes Kühlgetränk, wobei zu dessen Herstellung zu einer Geleegrundmasse Fruchtkomponenten hinzugefügt werden und anschließend gekühlt wird. Die WO 02/35944 A1 beschreibt ein thixotropes Gelgetränk, wobei zu einem Fruchtsaftgetränk eine vorgemischte trockene Verdickungsmittelzusammensetzung gemischt wird und ein saurer pH eingestellt wird. Die US 2004/0208976 A1 beschreibt ein Verfahren zur Herstellung einer Fruchtsoße, wobei eine Lösung aus Pektin und anderen Verdickungsmitteln hergestellt wird und diese mit einer Fruchtkomponente vermischt wird.

### Aufgabenstellung

Das der Erfindung zugrundeliegende technische Problem besteht im Wesentlichen darin, Vorrichtungen und Verfahren bereitzustellen, die die Nachteile des Standes der Technik überwinden, besonders eine einfache Herstellung von verdickten Frucht- und Gemüsezubereitungen ermöglichen, das heißt vor allem eine schnelle und nicht aufwändige Herstellung, besonders ohne die Benutzung und Verschmutzung verschiedener Haushaltsgeräte. Die verdickten Zubereitungen sollen dabei besonders in kleiner Menge einfach herzustellen sein, Gesundheitsrisiken durch Inhaltsstoffe wie Carrageen sollen ausgeschlossen sein und der Verlust an thermisch instabilen Bestandteilen der Frucht- oder Gemüsemasse soll minimiert sein.

Die Erfindung löst das ihr zugrundeliegende technische Problem durch die Gegenstände der Ansprüche, besonders durch ein "Kit of parts", kurz "Kit" genannt, also einer Vorrichtung zum Herstellen von verdickten, insbesondere gelierten oder kaltgerührten, Frucht- und/oder Gemüsezubereitungen, bestehend aus: (a) einem wiederverschließbaren Gefäß und (b) einer in diesem Gefäß vorgelegten Verdickungsmittelzusammensetzung gemäß Anspruch 10. Das Gefäß ist durch einen Deckel verschließbar. Das Gefäß ist vor Gebrauch mit dem Deckel verschlossen und besonders bevorzugt versiegelt.

Bevorzugt hat das Gefäß flaschenförmige, schalenförmige oder becherförmige Gestalt. Besonders bevorzugt ist das Gefäß ein festes Gefäß mit festen Gefäßwänden, insbesondere ein Becher oder ein Glas, beispielsweise ein typisches kommerziell erhältliches Süß- oder Sauerkonservenglas wie ein Marmeladenglas. In einer anderen bevorzugten Variante ist das Gefäß ein flexibles Gefäß mit flexiblen Gefäßwänden, besonders bevorzugt ein Beutel, eine Kunststoffflasche oder eine Tube.

Das Gefäß ist somit aus mindestens einem Wandmaterial, ausgewählt aus Glas, Metallen und Kunststoffen, aufgebaut. Besonders bevorzugt ist das Gefäß thermisch stabil und bevorzugt zur kurzzeitigen Erhitzung des Inhalts, beispielsweise in Mikrowellenöfen, geeignet.

Bevorzugt weist das Gefäß eine obere Öffnung mit einem Durchmesser auf, der das Einführen von Geräten, insbesondere haushaltsüblichen Geräten, zum Rühren, Mixen und/oder Zerkleinern des Gefäßinhaltes erlaubt. Bevorzugt hat die Öffnung des erfindungsgemäßen Gefäßes einen Durchmesser von mindestens 4 cm, von 4 bis 15 cm, bevorzugter von 4,5 bis 12 cm, von 5 bis 8 cm und am meisten bevorzugt von 5,5 bis 7 cm.

In einer bevorzugten Ausführungsform entspricht das Volumen des Gefäßes dem einer Menge von 1 bis etwa 25 Einzelportionen vergleichbaren Volumen plus einem gegebenenfalls zu berücksichtigenden Leervolumen. Bevorzugt beträgt das Volumen des Gefäßes von 50 bis 1000 ml, mehr bevorzugt von 75 bis 500 ml, von 100 bis 300 ml und am meisten bevorzugt von 150 bis 250 ml.

Erfindungsgemäß weist das Gefäß mindestens eine sichtbare Markierung, insbesondere einen Markierungsstrich oder Messstrich, an der äußeren und/oder inneren Gefäßwand oder an einem auf dem Gefäß befindlichen Etikett auf, die das Volumen der einzufüllenden Menge der frucht- und/oder gemüsehaltigen Komponente anzeigt. Die Markierung kann beispielsweise im Glas eingepresst oder auf das Gefäß aufgedruckt sein. Die Markierung kann auch als Taille oder Kerbe des Gefäßes ausgeformt sein. Die Markierung kann auch auf einem an dem Gefäß befindlichen Etikett oder Aufkleber dargestellt, beispielsweise aufgedruckt sein. Besonders bevorzugt ist die Markierung auch ein Eichstrich oder eine Eichmarke. Weiterhin können zwei oder mehrere Markierungen am Gefäß vorhanden sein, die besonders bevorzugt als Skala ausgeführt sind.

Die Markierung dient also zum Abmessen bestimmter Mengen/Volumina, besonders bestimmter Volumina an frucht- und/oder gemüsehaltigen Komponenten, das heißt an zu verdickendem Gut, die in das Gefäß eingefüllt werden. Die am Gefäß angebrachten Markierungen erlauben es, das zu verdickende Gut in einer bestimmten Menge in das Gefäß einzufüllen, ohne die Menge zuvor anhand des Gewichts durch Wiegen bestimmen zu müssen. Bei der Verwendung eines erfindungsgemäßen Kits wird die einzufüllende Menge an frucht- und/oder gemüsehaltiger Komponente vorzugsweise also nicht durch ihr Gewicht, sondern durch ihr Volumen bestimmt.

Für verschiedenartige frucht- und/oder gemüsehaltige Komponenten, beispielsweise für Früchte, Obst, Gemüse, Fruchtteile, Gemüseteile, Fruchtauszüge, Fruchtfleisch, Fruchtmus, Gemüsemus, Fruchtsaft, Gemüsesaft und Mischungen davon, die unterschiedliche Trockensubstanzgehalte oder Schüttdichten aufweisen oder die aufgrund verschiedener Anteile an fruchteigenen Pektinen unterschiedlich gut verdicken können am Gefäß unterschiedliche Markierungen angebracht sein. Auch können unterschiedliche Markierungen angebracht sein, um die Menge an einzufüllender frucht- oder gemüsehaltiger Komponente bei Verdickung bei Raumtemperatur und bei Verdickung mit Erhitzen zu unterscheiden. Dies kann dadurch notwendig sein, dass, je nach Verdickungs- beziehungsweise Gelierungsmethode, ein unterschiedliches Verhältnis zwischen Verdickungsmittelmischung und frucht- und/oder gemüsehaltiger Komponente verwendet werden muss, um ein optimales Ergebnis zu erhalten. Auch können mehrere Markierungen für unterschiedliche Mengen an einzufüllender frucht- und/oder gemüsehaltiger Komponente angezeigt werden, besonders um unterschiedliche Konsistenzen, mehr oder weniger stark verdickt, an gelierter Frucht- und/oder Gemüsezubereitung zu erhalten.

Bevorzugt ist zwischen der mindestens einen Markierung und der Gefäßöffnung ein Leervolumen vorhanden, besonders bevorzugt ein Leervolumen von 2 % bis 80 % des Gesamtvolumens des Gefäßes, am meisten bevorzugt von 5 % bis 15 %. Dieses Leervolumen erlaubt es, nach Einfüllen der frucht- und/oder gemüsehaltigen Komponente ein Rührgerät, beispielsweise einen Löffel, Mixer, oder Pürierstab, in das Gefäß einzuführen, um den Inhalt zu mischen, zu rühren und/oder zu zerkleinern. In einer bevorzugten Variante wird das zu verdickende Gut ausschließlich oder unterstützend durch Schütteln des geschlossenen Gefäßes mit der vorgelegten Verdickungsmittelzusammensetzung vermischt. Das Leervolumen ist im Gefäß vorgesehen, um dabei eine effektive Vermischung zu ermöglichen. Das Kit enthält zusätzlich eine Gebrauchsanleitung, die die Verwendung nach einem Verfahren gemäß der Ansprüche 1 bis 4 illustriert. Besonders bevorzugt ist die Gebrauchsanleitung auf das Gefäß aufgedruckt oder dem Kit beigelegt.

Das in einem erfindungsgemäßen Kit enthaltene wiederverschließbare Gefäß soll nach einer Benutzung im Sinne der Erfindung vorzugsweise wiederverwendet werden. Dazu kann es, nachdem es vorzugsweise gründlich ausgewaschen wurde, erneut mit einer entsprechenden Menge einer Verdickungsmittelzusammensetzung aufgefüllt werden. Diese wird vorzugsweise in einer, entsprechend dem Gefäßvolumen portionierten Nachfüllpackung bereitgestellt. Die vorliegende Erfindung betrifft auch ein Kit, enthaltend zusätzlich ein weiteres Gefäß, bevorzugt eine Tüte oder Paket, mit einer bestimmten Menge an Verdickungsmittelzusammensetzung zum Wiederbefüllen eines Gefäßes aus einem erfindungsgemäßen Kit.

Das erfindungsgemäße Kit enthält neben einem wiederverschließbaren Gefäß eine in dem Gefäß vorgelegte Verdickungsmittelzusammensetzung. Bevorzugt ist die Verdickungsmittelzusammensetzung in dem Gefäß, bezogen auf ein Gefäßvolumen von 250 ml, in einer Menge von 40 bis 180 g, bevorzugt von 50 bis 150 g vorgelegt. Es versteht sich, dass bei abweichenden Gefäßvolumina die vorgelegte Menge entsprechend angepasst wird. Darüber hinaus ist die vorgelegte Menge auch von der Art und Zusammensetzung der eingesetzten Verdickungsmittelzusammensetzung abhängig, besonders ob ein 1:1, 1:2 oder 1:3 (Verdickungsmittelzusammensetzung: Fruchtmasse) Ansatz gewählt wird.

Eine Verdickungsmittelzusammensetzung im Sinne der Erfindung ist bevorzugt eine Geliermittelzusammensetzung oder eine Zusammensetzung zur Zubereitung kaltgerührter Produkte. Unter dem Begriff "Verdickungsmittel" wird also bevorzugt ein Geliermittel oder ein Mittel zur Zubereitung kaltgerührter Produkte oder Speisen verstanden. Bevorzugt enthält die erfindungsgemäße Verdickungsmittelzusammensetzung neben einem Verdickungsmittel mindestens ein Süßungsmittel, mindestens ein körpergebendes Mittel, auch Füllstoff (bulking agent) genannt. Erfindungsgemäß ist die Verdickungsmittelzusammensetzung trocken und pulverförmig.

Bevorzugt ist eine in der Verdickungsmittelzusammensetzung enthaltene weitere Substanz ausgewählt aus Zuckern und Zuckeraustauschstoffen wie Zuckeralkoholen. Unter dem Begriff Zucker werden in diesem Zusammenhang Oligo-, Di- und Monosaccharide sowie entsprechende weitere Süßungsmittel, allein oder in Kombination miteinander, insbesondere Saccharose, Glucose, Glucosesirup und/oder Fructose verstanden. Bevorzugt ist der Zucker ausgewählt aus Saccharose, Glucose, Glucosesirup, Fructose und einer Mischung davon. Erfindungsgemäß bevorzugt ist der mindestens eine als Süßungsmittel verwendete Zucker teilweise, überwiegend oder vollständig durch mindestens einen Zuckeraustauschstoff, beispielsweise ein Zuckeralkohol, insbesondere ausgewählt aus Isomalt und Sorbit ersetzt. Das gewählte Süßungsmittel ist vorzugsweise teilweise, überwiegend oder vollständig durch mindestens einen Intensivsüßstoff ersetzt.

Auch das bevorzugt vorhandene mindestens eine körpergebende Mittel oder der Füllstoff ist vorzugsweise ausgewählt aus Zucker und Zuckeraustauschstoff.

Bevorzugt ist der Zucker und/oder Zuckeraustauschstoff feinkörnig. In einer Variante ist neben feinkörnigem Zucker und/oder Zuckeraustauschstoff in der Verdickungsmittelzusammensetzung grobkörniger Zucker und/oder Zuckeraustauschstoff vorhanden. Bevorzugt wird Zucker und/oder Zuckeraustauschstoff verwendet, der eine kleine kristalline Körnung aufweist, insbesondere die kleinstmögliche kristalline Körnung, die nach dem Stand der Technik zweckmäßigerweise erreicht werden kann. Zucker und/oder Zuckeraustauschstoff kann auch teilweise oder ganz in Form gemahlener Kristalle, beispielsweise als Puderzucker, vorliegen.

Bevorzugt haben mindestens 70 Gew.-% des mindestens einen Zuckers und/oder Zuckeraustauschstoffs eine Korngröße von höchstens 0,032 mm. Bevorzugt haben mindestens 80 Gew.-% des mindestens einen Zuckers eine Korngröße von höchstens 0,10 mm. In einer weiteren bevorzugten Ausführungsform haben mindestens 90 Gew.-% des mindestens einen Zuckers und/oder Zuckeraustauschstoffs eine Korngröße von 0,10 bis 0,40 mm, vorzugsweise von 0,10 bis 0,35 mm. Ist in einer bevorzugten Variante neben feinkörnigem Zucker und/oder Zuckeraustauschstoff mindestens ein grobkörniger Zucker und/oder Zuckeraustauschstoff vorhanden, so haben bevorzugt 80 Gew.-% des grobkörnigen Zuckers und/oder Zuckeraustauschstoffs eine Korngröße von mindestens 2,5 mm und bevorzugt maximal 10 Gew.-% von höchstens 4 mm. In einer weiteren bevorzugten Variante haben bevorzugt mindestens 80 Gew.-%, besonders bevorzugt mindestens 90 Gew.-% des grobkörnigen Zuckers und/oder Zuckeraustauschstoffs eine Korngröße von mindestens 0,2 und höchstens 1,6 mm, mehr bevorzugt mindestens 0,2 und höchstens 1,25 mm, mindestens 0,2 und höchstens 0,75 mm und am meisten bevorzugt mindestens 0,4 und höchstens 0,75 mm.

In einer besonders bevorzugten Ausführungsform enthält die Verdickungsmittelmischung neben Zucker und/oder Zuckeraustauschstoff mit kleiner bis mittlerer Kerngröße zusätzlich Zucker und/oder Zuckeraustauschstoff mit großer Kerngröße, wobei die große Kerngröße so gewählt wird, dass sie als Markersubstanz dient, deren vollständige Auflösung visuell die ausreichende Auflösung auch aller anderer Komponenten der gewählten Verdickungsmittelzusammensetzung anzeigt. Solange grobkörnige Kristalle in der Mischung vorhanden sind, wird der Anwender angehalten durch insbesondere gutes intensives Rühren auch die vor allem feinkörnigen Verdickungsmittelkomponenten in der zu verdickenden Frucht- und/oder Gemüsemasse gleichmäßig zu dispergieren. Dadurch kann ein besonders gutes Verdickungsergebnis erreicht werden.

Bevorzugt ist das mindestens eine in der Verdickungsmittelzusammensetzung enthaltene Verdickungsmittel ausgewählt aus Pektin, Pektingemisch, Agar-Agar, modifizierter Stärke und Mischungen davon. Besonders bevorzugt ist das Verdickungsmittel Pektin oder ein Pektingemisch, besonders niederverestertes Pektin. Am meisten bevorzugt ist niederverestertes Apfelpektin. Bevorzugt ist das Pektin oder Pektingemisch schnell dispergierbar. Bevorzugt ist das Pektin oder Pektingemisch kalt dispergierbar. Vor allem dispergierbares Pektin oder Pektingemisch kann die zu verdickenden frucht- und/oder gemüsehaltige Komponenten bereits in der Kälte, das heißt bei Raumtemperatur oder Kühlschranktemperatur verdicken, ohne dass die Mischung dazu erwärmt werden muss.

Vorzugsweise enthält die Verdickungsmittelzusammensetzung zusätzlich mindestens Säure oder Säuregemisch wie Genusssäure, bevorzugt Citronensäure.

Vorzugsweise enthält die Verdickungsmittelzusammensetzung mindestens einen Konservierungsstoff, wie Kaliumsorbat.

Bevorzugt enthält die Verdickungsmittelzusammensetzung mindestens einen weiteren Bestandteil, Hilfsstoff oder Wirkstoff, ausgewählt aus der Gruppe bestehend aus Vitaminen, Präbiotika, Proteinen, sekundären Pflanzenstoffen, Mineralpräparaten wie Kalzium-, Magnesium- und Natriumpräparate, gegebenenfalls in Form löslicher Mineralsalze, Nahrungsergänzungsstoffen, L-Carnitin, krankheitsvorbeugenden Stoffen, therapeutischen Wirkstoffen, Aromen, Farbstoffen, Gewürzen sowie dekorativen Teilchen und Dekorelementen wie Perlen, Stäbchen, Plättchen, Flocken, Granulate, sowie weiteren Verdickungsmitteln sowie Stabilisatoren. Es wird auch die Verwendung eines erfindungsgemäßen Kits zum Herstellen verdickter Zubereitungen, vor allem ausgewählt aus Frucht- und Gemüsezubereitungen beschrieben. Bei der Verwendung eines erfindungsgemäßen Kits, werden beim Herstellen von verdickten Zubereitungen vor allem temperaturempfindliche Inhaltsstoffe geschont. Bevorzugt ist auch die Verwendung eines erfindungsgemäßen Kits, zur Herstellung einer hochkalorischen Sportlernahrung, besonders bevorzugt einer gelförmigen, hochkalorischen Sportlernahrung.

Gegenstand der Erfindung ist auch ein Verfahren gemäß Anspruch 1 zur Herstellung von verdickten, insbesondere gelierten oder kaltgerührten Zubereitungen, ausgewählt aus Frucht- und Gemüsezubereitungen, aus mindestens einer frucht- und/oder gemüsehaltigen Komponente, wobei (a) ein die vorgenannte Verdickungsmittelzusammensetzung enthaltendes erfindungsgemäßes Gefäß mit einem Deckel verschlossen bereitgestellt wird und, bevorzugt später bei der Verwendung des bereitgestellten Gefäßes, (b) mindestens eine frucht- und/oder gemüsehaltige Komponente in das Gefäß auf die trockene, pulverförmige Verdickungsmittelzusammensetzung gegeben wird und anschließend (c) Verdickungsmittelzusammensetzung und die mindestens eine frucht- und/oder gemüsehaltige Komponente im Gefäß vermischt werden, sodass die mindestens eine frucht- und/oder gemüsehaltige Komponente verdickt, bevorzugt geliert oder kaltgerührt wird. Dabei entsteht (d) eine sofort verzehrbare verdickte, bevorzugt gelierte oder kaltgerührte Frucht- und/oder Gemüsezubereitung.

Bevorzugt erfolgt das Mischen in Schritt (c) durch Rühren. Das Mischen in Schritt (c) kann aber auch durch Schütteln eines verschlossenen Gefäßes mit Leervolumen sowie durch Massieren oder Quetschen eines verschlossenen elastischen Gefäßes erfolgen. Bevorzugt erfolgt das Mischen durch intensives Rühren beispielsweise mit einem Handmixer oder Pürierstab, der in das Gefäß eingeführt wird vor allem wenn bei der Verwendung von feinem Puderzucker in der Verdickungsmittelzusammensetzung Klümpchen entstehen und/oder grobe Kristalle von Zucker und/oder Zuckeraustauschstoff verwendet werden, die sich zunächst schwer lösen. Auf die vorstehend beschriebene Korngrößenverteilung und deren Anwendung wird verwiesen. Die so erhaltene Frucht- und/oder Gemüsezubereitung ist sofort verzehrbar. Die Verdickungsmittelzusammensetzung wird in dem verschlossenen, besonders bevorzugt versiegelten, Gefäß bereitgestellt. Bevorzugt ist die Verdickungsmittelzusammensetzung keimarm, besonders bevorzugt keimfrei.

Bei dem erfindungsgemäßen Verfahren wird also nicht wie im Stand der Technik üblich eine Verdickungsmittelmischung in eine frucht- und/oder gemüsehaltige Komponente hineingeben, sondern umgekehrt die frucht- und/oder gemüsehaltige Komponente auf die Verdickungsmittelzusammensetzung gegeben.

Vorliegend wird unter dem Begriff "kaltgerührt" verstanden, dass eine Zubereitung ohne Kochen, vorzugsweise allein durch Rühren, unter Verwendung mindestens eines Verdickungsmittels, beispielsweise Pektin, zum Verdicken gebracht wird. Erfindungsgemäß bevorzugt wird kaltgerührte Konfitüre, kaltgerührtes Gelee, kaltgerührter Fruchtaufstrich, kaltgerührtes Chutney oder Relish hergestellt, in dem mindestens ein Verdickungsmittel mit dem zu verdickenden Gut in Gegenwart von Wasser in Lösung gebracht wird, wobei die erhaltene Mischung nicht bis zum Kochen erwärmt wird und besonders bevorzugt überhaupt nicht erwärmt wird. Erfindungsgemäß kommt es beim Inverbindungbringen des mindestens einen Verdickungsmittels mit dem zu verdickenden Gut, vorzugsweise in der Kälte, bei Raumtemperatur oder gegebenenfalls nach leichter Erwärmung, zur Bildung einer verdickten, sirupartigen oder pastösen Zubereitung. Vorzugsweise wird die verdickte Zubereitung in einer Konsistenz erhalten, die der eines herkömmlich gekochten und gelierten Produktes entspricht.

Unter dem Begriff "gelieren" wird ein Vorgang verstanden, wobei eine erhitzte flüssige Zusammensetzung durch mindestens ein Geliermittel, beispielsweise Pektin, beim Abkühlen zu einem mehr oder weniger festen, verdickten Gelee gebunden wird. Dabei bildet sich die Gelstruktur erst aus, wenn die sogenannte Geliertemperatur, vorzugsweise beim Abkühlen von höheren Temperaturen kommend, erreicht wird. Während der Vorgang des Gelierens mindestens einen Erhitzungs- und Abkühlungsschritt beinhaltet, bei dem die Geliertemperatur zumindest einmal erreicht wird, wird bei der erfindungsgemäß bevorzugten Herstellung einer kaltgerührten Zubereitung die Zusammensetzung zum Zwecke des Verdickens zu keinem Zeitpunkt über die Geliertemperatur erhitzt oder zum Kochen gebracht.

Bevorzugt beträgt das Gewichtsverhältnis von Verdickungsmittelmischung zu verdickendem Gut von 1:1 bis 1:4 besonders bevorzugt von 1:2 bis 1:3. Ein solches Gewichtsverhältnis von Verdickungsmittelmischung zu frucht- oder gemüsehaltiger Komponente wird vorzugsweise durch einfache Zugabe eines bestimmten Volumens an frucht- und/oder gemüsehaltiger Komponente in das die Verdickungsmittelzusammensetzung enthaltende Gefäß erreicht. Erfindungsgemäß bevorzugt wird die erforderliche Menge an zu verdickendem Gut also nicht durch Wiegen bestimmt, sondern durch ihr Volumen. Das zuzugebende Volumen wird in Abhängigkeit vom Trockensubstanzgehalt und der Schüttdichte des Gemüses und/oder der Früchte gewählt. Eine erfindungsgemäß bevorzugtes Volumen entspricht dann, je nach Größe des Gefäßes, worin die Verdickungsmittelmischung vorgelegt ist, einer Füllmenge an frucht- und/oder gemüsehaltiger Komponente von 25 g bis 800 g, besonders bevorzugt von 80 g bis 200 g. Bevorzugt wird daher im Schritt (b) so viel einer frucht- und/oder gemüsehaltigen Komponente in das Gefäß hinzugegeben, wie zum Auffüllen eines bestimmten Volumens dieses Gefäßes erforderlich ist. Das bestimmte Volumen kann beispielsweise durch sichtbare Markierungen an der Wand des Gefäßes bestimmt sein. Besonders bevorzugt wird daher das Volumen an hinzugegebener frucht- oder gemüsehaltiger Komponente, wie vorstehend für das erfindungsgemäße Gefäß ausgeführt durch eine Markierung am Gefäß bestimmt.

In einer bevorzugten Variante wird in Schritt (c) und/oder anschließend und/oder davor die Mischung aus Verdickungsmittelzusammensetzung und frucht- und/oder gemüsehaltiger Komponente erhitzt. Bevorzugt erfolgt das Erhitzen in einem Mikrowellengerät oder in einem Wasserbad. Bevorzugt wird auf 30°C bis 90°C, besonders bevorzugt auf 35°C bis 70°C, am meisten bevorzugt auf 40°C bis 60°C, erhitzt. Bevorzugt wird für 50 bis 120 Sekunden erhitzt.

In einer bevorzugten Ausführungsform wird beim Erhitzen die Kochtemperatur nicht erreicht. Das bedeutet, dass die Mischung aus Verdickungsmittelzusammensetzung und frucht- und/oder gemüsehaltiger Komponente zu keinem Zeitpunkt kocht. Je nach Art des Erhitzens kann das erfindungsgemäße Gefäß während des Erhitzens verschlossen sein.

In einer bevorzugten Ausführungsform wird überwiegend zum Zwecke der Verdickens oder Gelierens erhitzt. In diesem Fall erfolgt das Erhitzen vorzugsweise während Schritt (c).

In einer anderen bevorzugten Ausführungsform wird überwiegend zum Zwecke der Keimreduzierung oder mikrobiologischen Stabilisierung erhitzt; dann erfolgt das Erhitzen vorzugsweise nach Schritt (c). Bevorzugt wird dazu der Inhalt des Gefäßes pasteurisiert oder durch kurzes Erhitzen, vorzugsweise 10 Sekunden bis 1 Minute, bevorzugt auf 60 °C bis 90 °C, bevorzugt in einer Mikrowelle, keimarm gemacht beziehungsweise mikrobiologisch stabilisiert. Unter Pasteurisieren wird dabei eine kurzzeitige Wärmebehandlung unterhalb von 100°C, bevorzugt unterhalb von 80°C, zur kurzzeitigen Konservierung d.h. Keimreduzierung des Produkts, bei gleichzeitig möglichst geringer temperaturbedingter Schädigung oder Verschlechterung des Lebensmittels verstanden.

Das optionale Erhitzen kann dazu verwendet werden, um unerwünschte und lebensgefährliche Organismen, beispielsweise Bandwurmeier (Echinococcus multilocularis, Echinococcus granulosus), mit denen rohe und frisch geerntete Früchte oder Gemüse kontaminiert sein können, abzutöten. Dies gilt insbesondere bei frucht- und/oder gemüsehaltigen Komponenten mit frischen selbstgesammelten Waldfrüchten, wie beispielsweise Walderdbeeren, Heidelbeeren, Brombeeren oder Pilze.

In einer besonders bevorzugten Variante wird die Mischung, vor allem in Schritt (c), im Kalten, das heißt vor allem bei Raumtemperaturen, besonders von 10°C bis 35°C, bevorzugt von etwa 21 °C, und vorzugsweise ohne jegliches zusätzliches Erwärmen der Mischung, verdickt.

Weiterhin ist vorgesehen, dass die Verdickungsmittelmischung, die im erfindungsgemäßen Verfahren verwendet wird, mindestens ein, zwei oder alle Merkmale aufweist, die vorstehend für eine Verdickungsmittelmischung als Bestandteil eines erfindungsgemäßen Kits genannt sind. Bevorzugt wird für das erfindungsgemäße Verfahren ein erfindungsgemäßes Gefäß benutzt, das mindestens ein, zwei oder alle Merkmale eines Gefäßes aufweist, das vorstehend als Bestandteil eines erfindungsgemäßen Kits genannt ist.

Bevorzugt enthält die frucht- und/oder gemüsehaltige Komponente mindestens einen Bestandteil, ausgewählt aus der Gruppe bestehend aus Früchten, Obst, Gemüse, Fruchtteilen, Gemüseteilen, Fruchtauszügen, Fruchtfleisch, Fruchtmus, Gemüsemus, Fruchtsaft, Gemüsesaft und Mischungen davon. Erfindungsgemäß bevorzugt ist die frucht- und/oder gemüsehaltige Komponente weich. Die frucht- und/oder gemüsehaltige Komponente kann bevorzugt zuvor zerkleinert worden sein. Die frucht- und/oder gemüsehaltige Komponente wird bevorzugt zuvor gefroren und an- oder aufgetaut und/oder gedünstet, mit dem Ziel eine weiche Konsistenz zu erhalten.

Neben Fruchtsaft kann als frucht- und/oder gemüsehaltige Komponente bevorzugt auch Fruchtnektar oder Limonade verwendet werden.

Bevorzugt enthält die frucht- und/oder gemüsehaltige Komponente zusätzlich krankheitsvorbeugende und/oder therapeutische Wirkstoffe, wie sekundäre Pflanzenstoffe, Mineralien und Vitamine.

In einer bevorzugten Ausführungsform wird in Schritt (b) neben der frucht- und/oder gemüsehaltigen Komponente auch mindestens ein vor allem gesundheitsfördernder Zusatzstoff in das Gefäß hinzugegeben. Bevorzugt ist der Zusatzstoff ausgewählt aus der Gruppe bestehend aus Vitaminen, Präbiotika, Proteinen, sekundären Pflanzenstoffen, Mineralpräparaten wie Kalzium-, Magnesium- und Natriumpräparate, gegebenenfalls in Form löslicher Mineralsalze, Nahrungsergänzungsstoffen, L-Carnitin, krankheitsvorbeugenden Stoffen, therapeutischen Wirkstoffen, Aromen, Farbstoffen, Gewürzen sowie dekorativen Teilchen und Dekorelementen wie Perlen, Stäbchen, Plättchen, Flocken und Granulate. Jedem Verbraucher soll dadurch die Möglichkeit gegeben werden, seine individuelle Dauermedikation oder Selbstmedikation durchführen zu können. Die erfindungsgemäße Lehre erlaubt auch die Verabreichung nicht wohlschmeckender Medikamente oder Wirkstoffe an geschmacksempfindliche Personen oder Kinder.

Bevorzugt ist die erhaltene verdickte Zubereitung Brotaufstrich, Konfitüre, Marmelade, Gelee, Dessert, Fruchtsoße oder Kuchen- und Tortenzutat. Erfindungsgemäß bevorzugt ist die verdickte Zubereitung Ketchup, Chutney, Relish, Dip oder Barbecuesoße. Die verdickte Zubereitung kann als galenische Darreichungsform, Sonden- oder Babynahrung oder Spezialdiät, insbesondere für Diabetiker oder Sportler, insbesondere als hochkalorische Sportlernahrung, beispielsweise als hochkalorisches Gel, vorliegen.

Konsistenz und organoleptische Eigenschaften der erhaltenen verdickten, besonders kaltgerührten, Frucht- und/oder Gemüsezubereitung werden vorzugsweise, zusätzlich oder ausschließlich, durch Zugabe mindestens eines Konsistenzgebers oder Füllstoffs, beispielsweise mittels von feinkörnigem Zucker, insbesondere Puderzucker, eingestellt. Es besteht also die Möglichkeit zu dünnflüssige Konfitüren beispielsweise durch Zugabe von feinkörnigem Zucker, insbesondere Puderzucker, und gegebenenfalls Auflösen des Zuckers durch zusätzliches Erhitzen wie gewünscht zu verfestigen. Es versteht sich, dass zum Erreichen einer weniger festen Konsistenz Flüssigkeit, beispielsweise Frucht- oder Gemüsesaft hinzugefügt werden kann. Bei der Verwendung überwiegend saftarmer Früchte oder Gemüse, kann beispielsweise ein Fruchtsaft mit passendem Geschmack hinzugefügt werden. Es werden auch verdickte Frucht- und/oder Gemüsezubereitungen, erhältlich aus einem erfindungsgemäßen Verfahren beschrieben. Die Erfindung umfasst auch die in den Unteransprüchen genannten Ausführungsformen.

### Ausführungsbeispiele

### Beispiel 1: Brotaufstrich mit Nahrungsergänzungsmittel L-Carnitin

In ein Glas mit einem Volumen von cirka 250 ml werden 60 g Zucker (Saccharose) mit einer Körnung 90 % von 0,1 bis 0,35 mm, 5 g niederverestertes, gut lösliches Pektin, 1 g Citronensäure, 0,1 g Kaliumsorbat und 1,5 g feinkristallines Acetyl-L-Carnitin-HCI (ALC) eingewogen, mit einem Deckel verschlossen und versiegelt.

Das Glas ist mit einem Etikett versehen, das zwei Markierungen ("kalt gerührt" und "Mikrowelle") hat, bis zu der eine frucht- und/oder gemüsehaltige Komponente eingefüllt werden soll. Die bestimmungsgemäße Verwendung der Markierung ist in Text- und Bildform auf dem Etikett illustriert.

Zu einem derartigen, die Verdickungsmischung und L-Carnitin enthaltenen Gefäß werden zerkleinerte Früchte oder Fruchtsaft nach Wahl bis zur Markierung zugeben und die Mischung anschließend intensiv gerührt. Werden großstückige Früchte verwendet, wirt mit dem Pürierstab, der in das Gefäß eingetaucht wird, gerührt. Andernfalls genügt ein Rühren mit dem Löffel. Nachdem gründlich verrührt wurde und alle Zuckerkristalle erkennbar gelöst sind, setzt unmittelbar die Verdickung der Zubereitung ein. Es wird ein sofort verfügbarer Brotaufstrich erhalten.

### Beispiel 2: Brotaufstrich mit Fruchtstücken

Aufgetaute und vormals tiefgefrorene (und dadurch weiche) Erdbeeren werden bis zur Markierung in ein 250 ml Glas, worin eine in Beispiel 1 beschriebene Verdickungsmittelmischung in trockener, pulverförmiger Form vorgelegt ist, zugegeben und mit einem Löffel innig verrührt. Das Rühren wird solange fortgesetzt, bis der Zucker aufgelöst ist und die Früchte zerkleinert sind.

Das vollständige Auflösen der Verdickungsmittelzusammensetzung wird durch das "Verschwinden" grobkörniger Zuckerkristalle, die in Lösung gehen, angezeigt. Eine vollständige Zerkleinerung der Früchte ist nicht erforderlich, wenn eine stückige Konsistenz erwünscht ist.

Anschließend wird das Glas mit dem zugehörigen Deckel verschlossen und bei Raumtemperatur oder im Kühlschrank stehengelassen. Nach kurzer Zeit ist der Inhalt des Glases verdickt. Ein vollständiges Verdicken tritt nach einigen Stunden, z.B. über Nacht, auf.

### Beispiel 3: Sportlergel oder Brotaufstrich aus Orangensaft

In einen die aus Beispiel 1 bekannte Verdickungsmittelmischung enthaltenden verschraubbaren elastischem Beutel mit ca. 100 ml Füllvolumen wird Orangensaft, gegebenenfalls mittels Einfülltrichter, bis zur Markierung zugegeben.

Der Beutel wird mit dem zugehörigen Deckel verschlossen, kurz intensiv geschüttelt und geknetet und anschließend bei Raumtemperatur oder im Kühlschrank stehengelassen. Nach kurzer Zeit ist der Inhalt des Beutels zu einem schmackhaften Brotaufstrich verdickt. Wahlweise kann die verdickte Zubereitung auch als Sportlergel direkt aus dem Beutel verkostet werden.

### Beispiel 4: Brotaufstrich aus Waldbeeren

Ca. 50 g Waldbeeren (oder 3 Esslöffel voll) werden zusammen mit ca. 100 ml Saft (beispielsweise Apfel-, Holunder-, Birnen- oder Traubensaft) bis zur Markierung in ein Glasgefäß eingefüllt, welches eine Verdickungsmittelmischung mit 60 g Saccharose (Körnung: 90% 0,1 bis 0,35 mm), 5 g niederverestertes, gut lösliches Pektin, 1 g Citronensäure, 0,1 g Kaliumsorbat enthält, gerührt und offen 90 Sekunden in der Mikrowelle bei etwa 850 Watt erhitzt. Dabei wird darauf geachtet, dass die Masse nicht zum Überschäumen kommt. Anschließend wird das heiße Glas mit dem Deckel verschlossen und bei Raumtemperatur oder im Kühlschrank abgekühlt. Nach kurzer Zeit ist die Masse verdickt und servierfertig.

### Beispiel 5: Zugabe von Nahrungsergänzungsmitteln

In das eine Verdickungsmischung enthaltende Glas wird ein oder mehrere Tütchen eines Magnesiumpräparats, wie es üblicherweise als Nahrungsergänzungsmittel zum Trinken verwendet wird, zugegeben. Anschließend wird mit Saft und gegebenenfalls mit fein zerkleinerten Früchten innig gemischt. Nach Auflösen der löslichen Bestandteile wird das Glas mit dem Deckel verschlossen und bei Raumtemperatur oder im Kühlschrank stehengelassen. Mit dieser Darreichungsform kann eine Abwechslung in eine Dauermedikation mit bestimmten pharmazeutischen Wirkstoffen, beispielsweise Nahrungsergänzungsmitteln, gebracht werden.

### Beispiel 6: Chutney

Ein Chutney wird hergestellt, indem 78 g (beziehungsweise 6 gehäufte Esslöffel) Tomaten, 78 g (beziehungsweise 10 schwach gehäufte Esslöffel) Zucchini, 30 g (beziehungsweise 4 gehäufte Esslöffel) Zwiebeln in feingehackter Form sowie 7 bis 15 ml (beziehungsweise 1 bis 2 Esslöffel) Essig mit einer Gewürzmischung aus Senfkörner, Salz, Pfeffer, Nelkenpulver und Zimt in das die Verdickungsmischung enthaltende Glas gegeben werden und die Komponenten gemischt werden. Man erhält ein sofort verzehrbares, verdicktes, schmackhaftes Chutney. Ein kurzes Erhitzen in einem Mikrowellenofen (für 60 Sekunden bei 850 Watt) ist optional möglich, um die Zubereitung mikrobiologisch zu stabilisieren.

## Patentansprüche

1. Verfahren zur Herstellung von verdickten Frucht- und/oder Gemüsezubereitungen aus einer frucht- und/oder gemüsehaltigen Komponente, wobei
a) ein wiederverschließbares Gefäß mit mindestens einer sichtbaren Markierung an der Gefäßwand, das eine trockene, pulverförmige Verdickungsmittelzusammensetzung enthält, zunächst mit einem Deckel verschlossen bereitgestellt wird;
b) zur Herstellung der verdickten Frucht- und/oder Gemüsezubereitung die frucht- und/oder gemüsehaltige Komponente auf die Verdickungsmittelzusammensetzung in das Gefäß gegeben wird, wobei das Volumen an hinzugegebener frucht- und/oder gemüsehaltiger Komponente durch diese Markierung an dem Gefäß bestimmt wird;
c) die vorgelegte Verdickungsmittelzusammensetzung und die eingefüllte frucht- und/oder gemüsehaltige Komponente in dem Gefäß in einem dadurch bestimmten Verhältnis vermischt werden, so dass die frucht- und/oder gemüsehaltige Komponente verdickt wird; und
d) eine sofort verzehrbare verdickte Frucht- und/oder Gemüsezubereitung im Gefäß erhalten wird.

2. Verfahren einem der vorstehenden Ansprüche, wobei in Schritt c) die Mischung aus Verdickungsmittelzusammensetzung und frucht- und/oder gemüsehaltiger Komponente erhitzt wird.

3. Verfahren nach Anspruch 1, wobei die Mischung in Schritt c) bei Raumtemperatur, verdickt wird.

4. Verfahren nach einem der vorstehenden Ansprüche, wobei das Mischen in Schritt c) durch Schütteln, Massieren oder Quetschen des verschlossenen Gefäßes erfolgt.

5. Verfahren nach einem der vorstehenden Ansprüche, wobei die Verdickungsmittelzusammensetzung neben einem Verdickungsmittel mindestens ein Süßungsmittel und/oder Füllstoff enthält.

6. Verfahren nach Anspruch 5, wobei Süßungsmittel und/oder Füllstoff mindestens ein Zucker ist.

7. Verfahren nach Anspruch 5 oder 6, wobei das Verdickungsmittel ausgewählt ist aus niederveresterten Pektinen, Apfelpektin und Mischungen davon.

8. Verfahren nach Anspruch 7, wobei das Pektin ausgewählt ist aus schnell dispergierbarem und kalt dispergierbarem Pektin.

9. Verfahren nach einem der vorstehenden Ansprüche, wobei die frucht- und/oder gemüsehaltige Komponente eine weiche Komponente ist, ausgewählt aus zerkleinerten, aufgetauten, angetauten und gedünsteten Früchten und Gemüsen.

10. Kit zum Herstellen von verdickten Frucht- und/oder Gemüsezubereitungen aus frucht- und/oder gemüsehaltigen Komponenten, bestehend aus:
a) ein verschlossenes und wiederverschließbares Gefäß zur Aufnahme der frucht- und/oder gemüsehaltigen Komponente, wobei das Gefäß mindestens eine sichtbare Markierung an der äußeren und/oder inneren Gefäßwand oder auf einem Etikett aufweist, die das Volumen der einzufüllenden frucht- und/oder gemüsehaltigen Komponente anzeigt,
b) eine in dem verschlossenen Gefäß vorgelegte trockene, pulverförmige Verdickungsmittelzusammensetzung und
c) eine Gebrauchsanleitung zur Verwendung der Komponenten a) und b) nach einem in einem der Ansprüche 1 bis 4 charakterisierten Verfahren.

11. Kit nach Anspruch 10, wobei die Verdickungsmittelzusammensetzung eine in den Ansprüchen 5 bis 8 charakterisierte Verdickungsmittelzusammensetzung ist.

12. Kit nach einem der Ansprüche 10 oder 11, wobei das wiederverschließbare Gefäß ein flexibles Gefäß, bevorzugt ein Beutel oder eine Tube, ist.

## Claims

1. A method for producing thickened fruit- and/or vegetable preparations of a fruit- and/or vegetable-containing component, wherein
a) a reclosable container, comprising at least one visible marking on the container wall, which contains a dry, powdery thickener composition, initially being provided sealed by a lid;
b) for producing the thickened fruit- and/or vegetable preparation, the fruit- and/or vegetable-containing component is added into the container onto the thickener composition, wherein the volume of added fruit- and/or vegetable-containing component is determined by means of said marking on the container;
c) the provided thickener composition and the added fruit- and/or vegetable-containing component are mixed in the container at a ratio so determined so that the fruit- and/or vegetable-containing component is thickened; and
d) a ready-to-eat thickened fruit- and/or vegetable preparation is obtained in said container.

2. The method according to any one of the preceding claims, wherein in step c) the mixture of thickener composition and fruit- and/or vegetable-containing component is heated.

3. The method according to claim 1, wherein in step c) the mixture is thickened at room temperature.

4. The method according to any one of the preceding claims, wherein in step c) the mixing is effected by shaking, massaging or squeezing the sealed container.

5. The method according to any one of the preceding claims, wherein in addition to a thickener, the thickener composition includes at least one sweetener and/or bulking agent.

6. The method according to claim 5, wherein sweetener and/or bulking agent is at least one sugar.

7. The method according to claim 5 or 6, wherein the thickener is selected from low-ester pectins, apple pectin and mixtures thereof.

8. The method according to claim 7, wherein the pectin is selected from fast-dispersing and cold-dispersing pectin.

9. The method according to any one of the preceding claims, wherein the fruit- and/or vegetable-containing component is a soft component, selected from comminuted, defrosted, partly thawed and steamed fruit and vegetables.

10. A kit for producing thickened fruit- and/or vegetable preparations of fruit- and/or vegetable-containing components, consisting of:
a) a sealed and reclosable container for receiving the fruit- and/or vegetable-containing component, wherein the container has at least one visible marking on the outer and/or inner container wall or on a label, which displays the volume of the fruit- and/or vegetable-containing component to be filled in,
b) a powdery thickener composition, which is pre-filled in the sealed container, and
c) an instruction manual for using the components a) and b) according to a method as **characterised in** any one of claims 1 to 4.

11. The kit according to claim 10, wherein the thickener composition is a thickener composition as **characterised in** claims 5 to 8.

12. The kit according to any one of claims 10 or 11, wherein the reclosable container is a flexible container, preferably a pouch or a tube.

## Revendications

1. Procédé de fabrication de préparations de fruits et/ou légumes épaissies à partir d'un composant contenant des fruits et/ou légumes, dans lequel
a) un récipient refermable avec au moins un repère visible sur la paroi de récipient qui contient une composition d'épaississant sèche pulvérulente est d'abord mis à disposition fermé avec un couvercle ;
b) le composant contenant des fruits et/ou légumes est versé sur la composition d'épaississant dans le récipient pour la fabrication de la préparation de fruits et/ou légumes épaissie, dans lequel le volume en composant contenant des fruits et/ou légumes ajouté est déterminé par ce repère sur le récipient ;
c) la composition d'épaississant présentée et le composant contenant des fruits et/ou légumes versé sont mélangés dans le récipient dans un rapport déterminé de telle manière et ainsi que le composant contenant des fruits et/ou légumes est épaissi ; et
d) une préparation de fruits et/ou légumes épaissie immédiatement consommable est obtenue dans le récipient.

2. Procédé selon une des revendications précédentes, dans lequel le mélange de composition d'épaississant et de composant contenant des fruits et/ou légumes est chauffé à l'étape c).

3. Procédé selon la revendication 1, dans lequel le mélange à l'étape c) est épaissi à température ambiante.

4. Procédé selon une des revendications précédentes, dans lequel le mélange à l'étape c) s'effectue par agitation, massage ou écrasement du récipient fermé.

5. Procédé selon une des revendications précédentes, dans lequel la composition d'épaississant contient au moins un édulcorant et/ou un agent de charge en plus d'épaississant.

6. Procédé selon la revendication 5, dans lequel l'édulcorant et/ou l'agent de charge est au moins un sucre.

7. Procédé selon la revendication 5 ou 6, dans lequel l'épaississant est sélectionné parmi des pectines de basse estérification, la pectine de pomme et des mélanges de celles-ci.

8. Procédé selon la revendication 7, dans lequel la pectine est sélectionnée parmi une pectine rapidement dispersible et dispersible à froid.

9. Procédé selon une des revendications précédentes, dans lequel le composant contenant des fruits et/ou légumes est un composant mou sélectionné parmi des fruits et légumes broyés, décongelés, partiellement décongelés et cuits à la vapeur.

10. Kit de fabrication de préparations de fruits et/ou légumes épaissies à partir de composants contenant des fruits et/ou légumes, constitué de :
a) un récipient scellé et refermable pour la réception du composant contenant des fruits et/ou légumes, dans lequel le récipient présente au moins un repère visible sur la paroi de récipient extérieure et/ou intérieure ou sur une étiquette qui indique le volume du composant contenant des fruits et/ou légumes à verser,
b) une composition d'épaississant sèche pulvérulente, préremplie dans le récipient scellé, et
c) un mode d'emploi pour l'utilisation des composants a) et b) selon un procédé caractérisé dans une des revendications 1 à 4.

11. Kit selon la revendication 10, dans lequel la composition d'épaississant est une composition d'épaississant **caractérisée** dans les revendications 5 à 8.

12. Kit selon une des revendications 10 ou 11, dans lequel le récipient refermable est un récipient flexible, de préférence un sachet ou un tube.
